# EUROPEAN PATENT SPECIFICATION

(11) **EP 2 899 374 B1**
(45) Date of publication and mention of the grant of the patent: **08.08.2018**
(21) Application number: 14190418.5
(22) Date of filing: 27.10.2014
(51) Int. Cl.: F01K 7/22, F01K 7/24, F01K 7/40, F01K 13/02, F22B 1/02, F22G 1/00, G21D 3/00, F01K 15/00, H02P 9/04, H02K 7/18

(54) **Apparatus and method for reactor power control of steam turbine power generation system**
Vorrichtung und Verfahren zur Reaktorleistungsregelung eines Dampfturbinenstromerzeugungssystems
Appareil et procédé de commande de puissance de réacteur d'un système de génération d'électricité de turbine à vapeur

(30) Priority: 09.01.2014 KR 20140003025
(43) Date of publication of application: 29.07.2015
(73) Proprietor: Doosan Heavy Industries & Construction Co., Ltd., Changwon-si Gyeongsangnam-do 642-792 (KR)
(72) Inventor: Ahn, Jun Ho, 642-090 Gyeongsangnam-do (KR)
(74) Representative: Ter Meer Steinmeister & Partner

(56) References cited:
- EP-A1- 2 351 914
- JP-A- S62 237 012
- JP-A- 2010 270 637
- US-A1- 2003 043 952
- SINDELAR R: "GEWAEHRLEISTUNG DER SEKUNDENDYNAMIK EINES DAMPFKRAFTWERKSBLOCKES", VGB KRAFTWERKSTECHNIK, VGB KRAFTWERKSTECHNIK GMBH. ESSEN, DE, vol. 71, no. 1, 1 January 1991 (1991-01-01), pages 4-13, XP000178871, ISSN: 0372-5715

## Description

### Field of the invention

The present invention concerns an apparatus for reaction vessel power control of a steam turbine power generation system and a method for reaction vessel power control of a steam turbine power generation system.

### Description of the Related Art

Power generation systems using a steam turbine are typically used for thermal power plants and/or nuclear power plants.

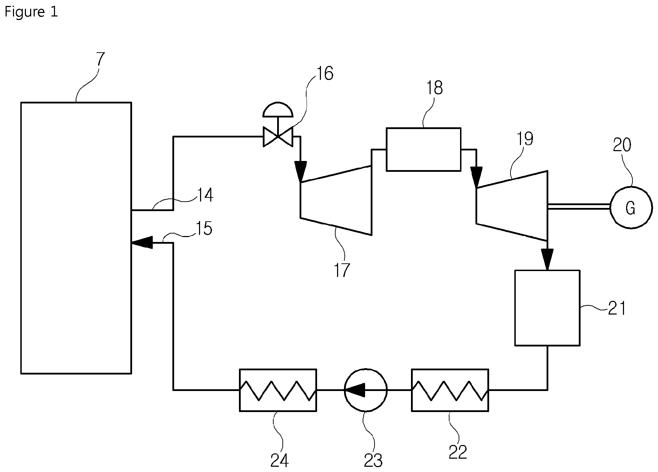

Among them, a reaction vessel such as, for example, a nuclear power generation system, will be illustratively described in more detail with reference to Fig. 1. The power generation system may include a reactor or reaction vessel 7, turbines 17 and 19, a condenser 21, and feed water heaters 22 and 24.

The reaction vessel 7 includes a core in which a plurality of fuel rods and a control rod for controlling reactivity of the core are arranged, and generates steam supplied to the turbines 17 and 18 to be described later. The control rod adjusts power of the reaction vessel, namely core power.

Steam generated by the reactor or reaction vessel 7 is supplied to a main steam pipe 14 connected to the reaction vessel 7. The steam supplied to the main steam pipe 14 is supplied to a high-pressure turbine 17 via a main steam pipe control valve 16 provided on the main steam pipe 14. The main steam pipe control valve 16 regulates an amount of the steam supplied to the high-pressure turbine 17.

The steam supplied to the high-pressure turbine 17 is supplied to a low-pressure turbine 19 via a moisture separator reheater 18. The low-pressure turbine 19 is connected to a generator 20.

The condenser 21 for condensing the steam discharged from the low-pressure turbine 19 is installed at an outlet of the low-pressure turbine 19. A low-pressure feed water heater 22, a feed water pump 23, and a high-pressure feed water heater 24 are installed downstream from the condenser 21. A feed water pipe 15 is connected to an outlet of the high-pressure feed water heater 24.

The feed water pipe 15 joined from the condenser 21 to the reaction vessel 7 is provided downstream from the condenser 21. The low-pressure feed water heater 22 for heating feed water supplied from the condenser 21 and the high-pressure feed water 24 for pressurizing feed water to supply the pressurized feed water to the reaction vessel 7 are sequentially disposed on the feed water pipe 15.

In a nuclear power generation system such as, for example, the system described above, steam generated by the reactor 7 is supplied to the high-pressure and low-pressure turbines through the main steam pipe, and the turbines are rotated by the steam to rotate the generator connected thereto.

The steam discharged from the low-pressure turbine is condensed through the condenser, and the condensate is heated by the multiple feed water heaters installed on the feed water pipe so as to be supplied back to the reaction vessel through the feed water pipe.

Meanwhile, consumption of electric power greatly varies according to seasons, weekdays and weekends, day, night, etc. An electric power system allows an amount of power generation and power consumption to be balanced so that a voltage and a power system frequency are stably maintained.

Power adjustment of the electric power system as a whole is mainly performed on thermal power generation or hydraulic power generation. However, power control is also desired on power generation such as, for example, nuclear power generation, as the percentage of nuclear power generation has been recently increased.

Conventionally, gaseous radioactive fission products (xenon, iodine, etc) may leak into reaction vessel cooling water when a fuel cladding conduit is cracked by a thermal change according to a power change. Therefore, the nuclear power generation system operates at uniform power.

However, in recent years, in nuclear power generation systems, measures such as an improvement of the cladding conduit are taken to resolve the above leakage, and electric power companies, manufacturing companies, and research institutes perform research, test, and the like on power adjustment operation. In addition, nuclear power generation systems are designed such that power may be changed, that is, power may be adjusted by operation thereof.

When consumption of electric power exceeds production in the electric power system, the speed of a generator is decreased and a power system frequency is lowered. When the production exceeds the consumption, the speed of the generator is increased and the power system frequency is raised. The power control of the power generation system for corresponding to such a change is generally performed by a method of regulating an amount of steam generated by the reactor (or a boiler) or regulating an amount of steam supplied to the turbine.

However, the amount of steam generated by the reactor is regulated by control of a flow rate of the core and position adjustment of the control rod, and the amount of steam generated by the boiler is also regulated by regulating an amount of feed water, an amount of fuel, and an amount of air. Accordingly, the time constant is large until the power of the generator is changed. Therefore, follow-up performance corresponding to a power change is typically deteriorated.

The method of regulating the amount of steam supplied to the turbine through the main steam pipe control valve may merely reduce the power of the generator by reducing an amount of steam supplied to the high-pressure turbine. Accordingly, when power of the generator is reduced, the method may not properly correspond to a request for compensation of the reduced power.
US 2003/043952 A1 describes a steam turbine power plant comprising a high-pressure turbine to be driven by steam generated by a steam generator, a first reheater for separating moisture from steam discharged from the high-pressure turbine and heating the steam, an intermediate-pressure turbine to be driven by the steam heated by the first reheater, a second reheater for heating exhaust steam discharged from the intermediate-pressure turbine, and a low-pressure turbine to be driven by the steam heated by the second reheater. The intermediate-pressure turbine discharges dry steam.
JP S62 237012 A describes a heated steam pressure controller of a heater for a steam turbine. The heated steam pressure controller controls the opening and closing of a heated steam control valve by using the temperature detection signal which is supplied from a temperature sensor for detecting the heated steam temperature at the inlet of a heater, output demand signal, pressure detection signal, and an operation mode signal as input signals.
JP 2010 270637 A describes a steam turbine generation system including a boiler, a turbine and a generator. A variable speed gear varying a rotation speed of a condensate pump is connected to the condensate pump, and a control device is connected to the variable speed gear. The control device controls the variable speed gear so as to reduce the rotation speed of the condensate pump to be smaller than the rotation speed in normal operation during condensate stop operation for reducing the flow rate of the condensate.

### SUMMARY

Example embodiments relate to an apparatus and method for reactor power control of a steam turbine power generation system capable of improving follow-up performance to a power change when compensation for a power reduction of a generator is requested. The apparatus of the invention is defined by appended independent claim 1 whilst the method of the invention is defined by appended independent claim 6.

Other objects and advantages of the example embodiments can be understood by the following description. Also, it is obvious to those skilled in the art to which the example embodiments pertain that the objects and advantages can be realized by the means as claimed and combinations thereof.

The object is solved by the features of the independent claims. Preferred embodiments are provided in the dependent claims.

In accordance with at least one example embodiment, an apparatus for reactor power control of a steam turbine power generation system including a reactor, a high-pressure turbine to which steam is supplied from the reactor through a main steam pipe, a low-pressure turbine to which the steam discharged from the high-pressure turbine is supplied via a moisture separator reheater, a branch pipe branched from the main steam pipe to be connected to the moisture separator reheater, a generator connected to the low-pressure turbine, a condenser for condensing the steam discharged from the low-pressure turbine, a condensate pump for feeding condensate condensed by the condenser, and feed water heaters for heating the condensate, the apparatus includes a branch pipe control valve provided on the branch pipe and a control unit for controlling an opening degree of the branch pipe control valve.

In the example apparatus, the control unit controls the opening degree of the branch pipe control valve according to a power compensation request signal corresponding to a power reduction of the generator.

In the example apparatus, the control unit may control the branch pipe control valve such that the branch pipe control valve becomes any one of a fully open state, a partially closed state, and a fully closed state.

The example apparatus further includes a condensate pipe control valve provided on a condensate pipe connected between the condenser and the condensate pump, an opening degree of the condensate pipe control valve being controlled by the control unit.

The apparatus may further include an extraction pipe control valve provided on a first extraction pipe connected between a low-pressure feed water heater of the feed water heaters and the low-pressure turbine or provided on a second extraction pipe connected between a high-pressure feed water heater of the feed water heaters and the high-pressure turbine, an opening degree of the extraction pipe control valve being controlled by the control unit.

In accordance with another example embodiment, a method for reactor power control of a steam turbine power generation system including a reactor, a high-pressure turbine to which steam is supplied from the reactor through a main steam pipe, a low-pressure turbine to which the steam discharged from the high-pressure turbine is supplied via a moisture separator reheater, a branch pipe branched from the main steam pipe to be connected to the moisture separator reheater, a generator connected to the low-pressure turbine, a condenser for condensing the steam discharged from the low-pressure turbine, a condensate pump for feeding condensate condensed by the condenser, and feed water heaters for heating the condensate, the method includes (a) measuring power of the generator, (b) determining whether the power is reduced by comparing a measured power value of the generator with a target power value, (c) generating a power compensation request signal corresponding to the power reduction of the generator, and (d) regulating an amount of steam supplied through the branch pipe according to the power compensation request signal.

In the example method, (d) regulating the amount of steam includes controlling an opening degree of a branch pipe control valve provided on the branch pipe.

In the example method, the branch pipe control valve may be controlled to become any one of a fully open state, a partially closed state, and a fully closed state.

The example method may further include, after (d) regulating the amount of steam, (e) determining whether power compensation is performed by measuring the power of the generator, and (f) controlling the branch pipe control valve such that the branch pipe control valve becomes a state before (d) regulating the amount of steam according to the determination of the power compensation.

The example method further includes, after (c) generating a power compensation request signal, (d') regulating an amount of condensate introduced into the condensate pump according to the power compensation request signal.

In the example method, (d') regulating the amount of condensate is simultaneously or contemporaneously performed together with (d) regulating the amount of steam.

The example method may further include, after (c) generating a power compensation request signal, (d") regulating an amount of extraction steam supplied from the high-pressure turbine or the low-pressure turbine to the feed water heaters according to the power compensation request signal.

In the example method, (d") regulating the amount of extraction steam may be simultaneously or contemporaneously performed together with (d) regulating the amount of steam.

In accordance with at least one example embodiment, an apparatus for reactor power control of a steam turbine power generation system including a turbine supplied with steam to rotate a generator, a condenser for condensing the steam discharged from the turbine, a condensate pump for feeding condensate condensed by the condenser, and a feed water heater for heating the condensate, includes a condensate pipe control valve provided on a condensate pipe connected between the condenser and the condensate pump, an extraction pipe control valve provided on an extraction pipe connected from the turbine to the feed water heater, and a control unit for controlling opening degrees of the condensate pipe control valve and the extraction pipe control valve.

In the example apparatus, the control unit may control opening degrees of a condensate pipe control valve and an extraction pipe control valve according to a power compensation request signal corresponding to a power reduction of the generator.

It is to be understood that both the foregoing general description and the following detailed description are examples and explanatory in nature, and are intended to provide further explanation of the subject matter as claimed.

### BRIEF DESCRIPTION OF THE DRAWINGS

The above and other objects, features and other advantages of the example embodiments will be more clearly understood from the following detailed description taken in conjunction with the accompanying drawings, in which:
Fig. 1 is a diagram schematically illustrating an illustrative configuration of a related art nuclear power generation system;
Fig. 2 is a diagram schematically illustrating a configuration of a steam turbine power generation system including an apparatus for reactor power control according to an example embodiment;
Fig. 3 is a flowchart illustrating a method for reactor power control of a steam turbine power generation system according to an example embodiment; and
Fig. 4 is a diagram schematically illustrating a configuration of a steam turbine power generation system including an apparatus for reactor power control according to another example which may supplement an embodiment of the invention.

### DETAILED DESCRIPTION

An apparatus and method for reactor power control of a steam turbine power generation system according to example embodiments will be described below in more detail with reference to the accompanying drawings. In the description, the drawings are not necessarily to scale and in some instances, proportions may have been exaggerated in order to clearly illustrate features of the embodiments.

In addition, terms to be described later are terms defined in consideration of functions of the example embodiments, and these may vary with the intention or practice of a user or an operator. Therefore, such terms should be defined based on the entire content disclosed herein.

Furthermore, the following example embodiments are for the purpose of describing the components set forth in the appended claims only and are not intended to limit the scope of the example embodiments. More particularly, various variations and modifications are possible in concrete constituent elements of the example embodiments, and it is to be understood that differences relevant to the variations and modifications fall within the scope of the present disclosure defined in the appended claims.

It will be understood that when an element is referred to as being "on," "connected" or "coupled" to another element, it can be directly on, connected or coupled to the other element or intervening elements may be present. In contrast, when an element is referred to as being "directly on," "directly connected" or "directly coupled" to another element, there are no intervening elements present. As used herein the term "and/or" includes any and all combinations of one or more of the associated listed items. Further, it will be understood that when a layer is referred to as being "under" another layer, it can be directly under or one or more intervening layers may also be present. In addition, it will also be understood that when a layer is referred to as being "between" two layers, it can be the only layer between the two layers, or one or more intervening layers may also be present.

It will be understood that, although the terms "first", "second", etc. may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed below could be termed a second element, component, region, layer or section without departing from the teachings of example embodiments.

In the drawing figures, the dimensions of layers and regions may be exaggerated for clarity of illustration. Like reference numerals refer to like elements throughout. The same reference numbers indicate the same components throughout the specification.

Spatially relative terms, such as "beneath," "below," "lower," "above," "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Example embodiments are described herein with reference to cross-sectional illustrations that are schematic illustrations of idealized embodiments (and intermediate structures) of example embodiments. As such, variations from the shapes of the illustrations as a result, for example, of manufacturing techniques and/or tolerances, are to be expected. Thus, example embodiments should not be construed as limited to the particular shapes of regions illustrated herein but are to include deviations in shapes that result, for example, from manufacturing. For example, an implanted region illustrated as a rectangle will, typically, have rounded or curved features and/or a gradient of implant concentration at its edges rather than a binary change from implanted to non-implanted region. Likewise, a buried region formed by implantation may result in some implantation in the region between the buried region and the surface through which the implantation takes place. Thus, the regions illustrated in the figures are schematic in nature and their shapes are not intended to illustrate the actual shape of a region of a device and are not intended to limit the scope of example embodiments.

Unless otherwise defined, all terms (including technical and scientific terms) used herein have the same meaning as commonly understood by one of ordinary skill in the art to which example embodiments belong. It will be further understood that terms, such as those defined in commonly-used dictionaries, should be interpreted as having a meaning that is consistent with their meaning in the context of the relevant art and will not be interpreted in an idealized or overly formal sense unless expressly so defined herein. As used herein, expressions such as "at least one of," when preceding a list of elements, modify the entire list of elements and do not modify the individual elements of the list.

Although corresponding plan views and/or perspective views of some cross-sectional view(s) may not be shown, the cross-sectional view(s) of device structures illustrated herein provide support for a plurality of device structures that extend along two different directions as would be illustrated in a plan view, and/or in three different directions as would be illustrated in a perspective view. The two different directions may or may not be orthogonal to each other. The three different directions may include a third direction that may be orthogonal to the two different directions. The plurality of device structures may be integrated in a same electronic device. For example, when a device structure (e.g., a memory cell structure or a transistor structure) is illustrated in a cross-sectional view, an electronic device may include a plurality of the device structures (e.g., memory cell structures or transistor structures), as would be illustrated by a plan view of the electronic device. The plurality of device structures may be arranged in an array and/or in a two-dimensional pattern. The invention is solely defined by the appended independent claims.

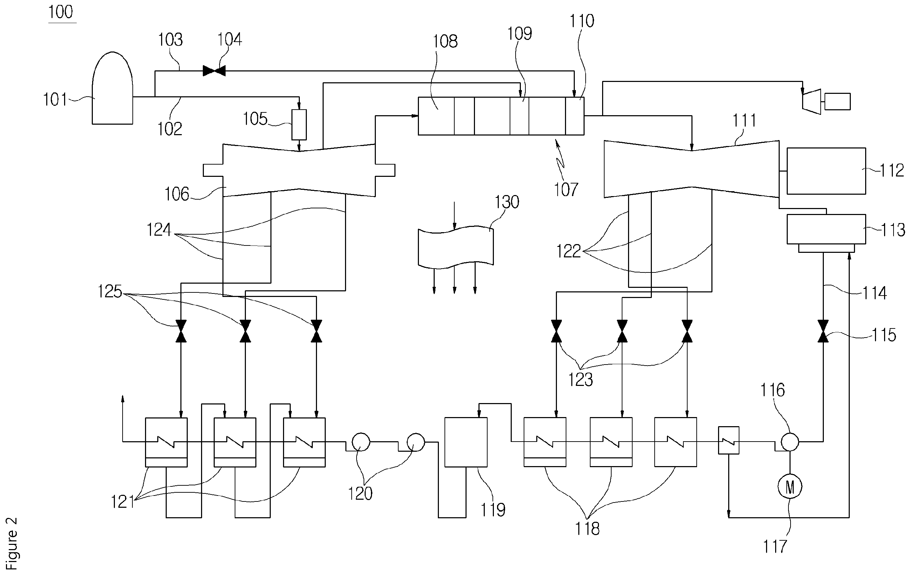

Hereinafter, an apparatus for reactor power control of a steam turbine power generation system according to an example embodiment will be described in detail with reference to Fig. 2. Fig. 2 is a diagram schematically illustrating a configuration of a steam turbine power generation system including an apparatus for reactor power control according to an example embodiment.

First, an illustrative power generation system to which the apparatus for reactor power control according to the example embodiment is applicable may be a power generation system 100 such as, for example, a nuclear power generation system or a thermal power generation system, as shown in Fig. 2.

As shown in the drawing, the power generation system 100 may include a reactor 101, a high-pressure turbine 106, a low-pressure turbine 111, a moisture separator reheater 107, a generator 112, a condenser 113, a condensate pump 116, and feed water heaters 118 and 121.

The reactor 101 is configured to generate steam, and the steam generated by the reactor 101 may be supplied to the high-pressure turbine 106 through a main steam pipe 102. According to at least one example embodiment, a main steam pipe control valve 105 may be installed at an inlet of the high-pressure turbine 106 on the main steam pipe 102 so that an amount of steam supplied to the high-pressure turbine 106 may be regulated by controlling an opening degree of the main steam pipe control valve 105.

According to at least one example embodiment, the steam discharged from the high-pressure turbine 106 is supplied to the low-pressure turbine 111 via the moisture separator reheater 107 to be described later.

The steam supplied to the high-pressure turbine 106 and the low-pressure turbine 111 allows rotational energy to be generated by the turbine, and the rotational energy is converted into electrical energy by rotation of the generator 112 connected to the low-pressure turbine 111.

The moisture separator reheater (MSR) 107, which separates moisture from the steam discharged from the high-pressure turbine 106 and heats the steam having a lowered temperature so as to recover energy efficiency, is disposed between the high-pressure turbine 106 and the low-pressure turbine 111.

The moisture separator reheater 107 may include a moisture separator 108 for separating moisture, and a heater for heating steam from which the moisture is separated. In this case, the heater may include a first heater 109 and a second heater 110, for sequentially heating steam.

For example, heated steam in the first heater 109 may be extraction steam supplied from the high-pressure turbine 106 and heated steam in the second heater 110 may be branch steam branched from the main steam pipe 102.

The main steam pipe 102 may be formed with a branch pipe 103 such that the heated steam may be supplied to the second heater 110. The branch pipe 103 is branched from the main steam pipe 102 to be connected to the second heater 110. A portion of the steam supplied through the main steam pipe 102 is supplied to the second heater 110 through the branch pipe 103 so as to be used as heated steam.

A process of separating moisture and heating steam using the moisture separator and reheater 107, according to at least one example embodiment, will be described.

The steam at the inlet of the high-pressure turbine 106 typically includes moisture. The steam supplied to the high-pressure turbine 106 actuates the turbine so that heat energy of the steam is converted into rotational energy of the turbine.

Thus, the temperature of the steam is lowered and the degree of humidity of the steam increases at the inlet of the high-pressure turbine 106. When the humidity increases, loss of the turbine is increased compared to dry steam and turbine blades may be corroded due to the moisture.

In view of the above, moisture contained in the steam discharged from the high-pressure turbine 106 is separated by the moisture separator 108. Exhaust steam in the high-pressure turbine 106 thus has a low humidity due to moisture separation.

According to at least one example embodiment, the steam from which moisture is separated by the moisture separator 108 is heated by the above extraction steam and branch steam in the first and second heater 109 and 110 to be converted into dry steam. The dry steam from which moisture is removed is supplied to the low-pressure turbine 111.

The steam rotating the low-pressure turbine 111 is condensed through heat exchange by the condenser 113 and becomes a condensate. The condensate condensed by the condenser 113 is stored in a condenser hot well and supplied to the feed water heaters while being fed by the condensate pump 116 driven by a motor 117.

The feed water heaters may include a low-pressure feed water heater 118 and a high-pressure feed water heater 121.

The low-pressure feed water heater 118 is supplied with the condensate by the condensate pump 116. The condensate supplied to the low-pressure feed water heater 118 by the condensate pump 116 is heated by low-pressure extraction steam, as a heat source, extracted from the low-pressure turbine 111.

One or more first extraction pipes 122 may be connected between the low-pressure turbine 111 and the low-pressure feed water heater 118 such that the low-pressure extraction steam is supplied to the low-pressure feed water heater 118 through the first extraction pipe 122. Feed water heated by the low-pressure feed water heater 118 is stored in a feed water tank 119.

According to at least one example embodiment, the feed water stored in the feed water tank 119 is supplied to the high-pressure feed water heater 121 in a state in which the pressure of the feed water is increased by a feed water pump 120. The condensate supplied to the high-pressure feed water heater 121 is heated by high-pressure extraction steam, as a heat source, extracted from the high-pressure turbine 106. A second extraction pipe 124 may be connected between the high-pressure turbine 106 and the high-pressure feed water heater 121 such that the high-pressure extraction steam is supplied to the high-pressure feed water heater 121 through the second extraction pipe 124.

The feed water heated by the high-pressure feed water heater 121 may be supplied to the reactor 101.

Meanwhile, the apparatus for power control of a steam turbine power generation system according to the example embodiment includes a branch pipe control valve 104 provided on the branch pipe 103, and a control unit 130 for controlling an opening degree of the branch pipe control valve 104.

As described above, the branch pipe 103 is a pipe which is branched from the main steam pipe 102 to be connected to the second heater 110 so that branch steam is supplied to the second heater 110 through the branch pipe 103. The branch pipe control valve 104 may regulate an amount of branch steam supplied through the branch pipe 103 while the opening degree thereof is adjusted by the control unit 130.

Power information of the generator 112 is transmitted to the control unit 130 under rated power operation. In this case, for example, when power of the turbine is reduced, the control unit 130, which obtains power information of the generator 112 according to the same may generate power compensation request signals to compensate for the reduced power.

The power compensation request signals may be divided and generated according to the extent of power compensation values determined by the control unit 130. The power compensation request signals includes signals for determining valve positions of the above-mentioned branch pipe control valve 104. In this case, the determined valve positions may be divided and determined according to the extent of the power compensation values described above.

The opening degree of the branch pipe control valve 104 is controlled according to the power compensation request signals output from the control unit 130. The branch pipe control valve 104 is controlled according to the valve positions determined by the control unit 130 such that the branch pipe control valve 104 is from a substantially fully open state to a fully closed state, from a substantially fully open state to a partially closed state, or from a partially closed state to a substantially fully closed state.

However, although the branch pipe control valve 104 may include the control of the partially closed state as described above, it may also be simply controlled to be any one of the substantially fully open state and the substantially fully closed state.

As such, the branch pipe control valve 104 is controlled to be partially closed or fully closed, and thus an amount of branch steam supplied to the second heater 110 may be partially decreased or substantially fully blocked.

As the amount of steam branched from the main steam pipe 102 is decreased or blocked, the amount of steam supplied to the high-pressure turbine 106 is relatively increased. As a result, the power of the generator 112 may be increased. That is, this is to compensate for the reduced power of the generator.

In accordance with the apparatus for reactor power control according to the example embodiment, even though control for increasing or decreasing an amount of steam generated by the reactor 101 may not be performed, it may be possible to compensate for the power of the generator 112 through control of the amount of steam supplied to the high-pressure turbine 106 by controlling the amount of branch steam. Accordingly, it may be possible to significantly improve follow-up performance corresponding to the power change.

The apparatus for reactor power control according to the example embodiment further includes a condensate pipe control valve 115. The condensate pipe control valve 115 is provided on a condensate pipe 114 connected between the condenser 113 and the condensate pump 116. An opening degree of the condensate pipe control valve 115 may be controlled according to the above-mentioned power compensation request signals from the control unit 130.

When compensation for the power reduction of the generator 112 is requested, the control unit 130 determines valve positions of the condensate pipe control valve 115 so that the condensate pipe control valve 115 is controlled to be from a substantially fully closed state to a partially closed state, from a substantially fully closed state to a substantially fully closed state, or from a partially closed state to a substantially fully closed state.

An amount of condensate introduced into the condensate pump 116 may be partially decreased or substantially fully blocked according to control of the opening degree of the condensate pipe control valve 115 by the control unit 130.

Such control may allow an amount of steam discharged from the low-pressure turbine 111 to be decreased, and thus the power of the turbine may be increased.

In addition, since an amount of condensate fed by the condensate pump may be decreased, it may be possible to reduce power required in the condensate pump 116. Thus, as the required power is reduced, it may be possible to decrease the speed of the motor 117 for driving the condensate pump 116 compared to during normal operation and thus to reduce power consumption. Since the reduction of the power consumption is compensated with power of the generator 112, the power of the generator 112 is consequentially increased.

The apparatus for reactor power control according to the example embodiment may further include extraction pipe control valves 123 and 125.

The extraction pipe control valves 123 and 125 may be provided on the above-mentioned first extraction pipe 122 or second extraction pipe 124. An opening degree of each of the extraction pipe control valves 123 and 125 may be controlled according to the above-mentioned power compensation request signals from the control unit 130.

An amount of extraction steam supplied to the low-pressure feed water heater 118 or the high-pressure feed water heater 121 may be partially decreased or substantially fully blocked according to control of the opening degree of the extraction pipe control valve 123 or 125. As a result, the amount of steam used for turbine actuation in the high-pressure turbine 106 or the low-pressure turbine 111 is increased, and thus the power of the generator 112 may be increased.

Meanwhile, an amount of feed water stored in the above-mentioned feed water tank 119 and an amount of condensate stored in the condenser hot well may be measured by a measuring means and be transmitted to the control unit 130. The control unit 130 analyzes the measured amount of feed water and amount of condensate, and then may control any one opening degree of the branch pipe control valve 104, the condensate pipe control valve 115, and the extraction pipe control valves 123 and 125, simultaneously control two or more opening degrees of them, or interlock and control two or more opening degrees of them at intervals of time.

Although the above turbines have been described to be configured of the high-pressure turbine 106 and the low-pressure turbine 111, the example embodiments are not limited thereto. The example embodiments may further include an intermediate-pressure turbine disposed between the high-pressure turbine 106 and the low-pressure turbine 111.

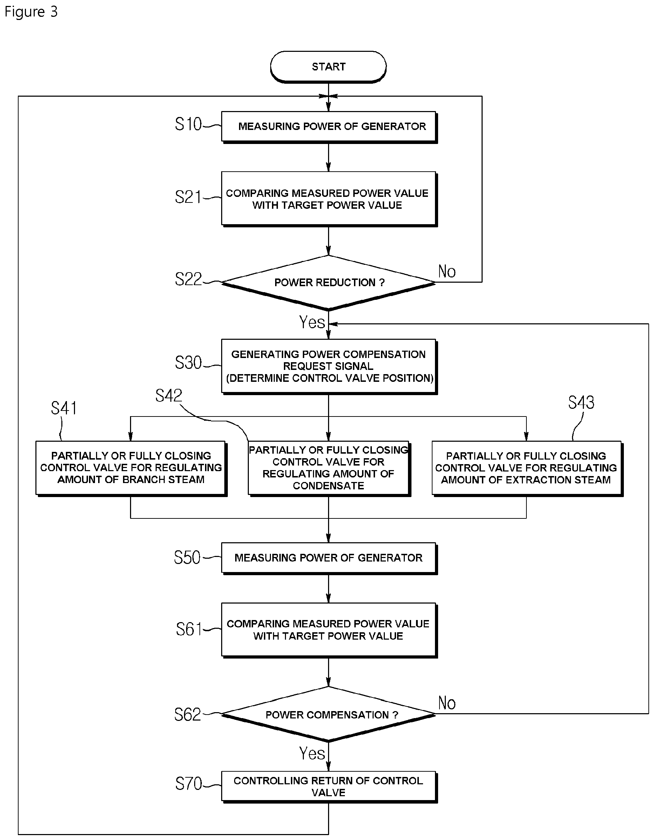

Hereinafter, a method for power control of a steam turbine power generation system according to an example embodiment will be described in detail with reference to Figs. 2 and 3. Fig. 3 is a flowchart illustrating a method for power control of a steam turbine power generation system according to an example embodiment.

First, the method for reactor power control of a steam turbine power generation system according to the example embodiment may perform an operation S10 of measuring power of the generator 112. The power of the generator 112 may be consistently measured, and measured power information may be transmitted to the control unit 130.

Next, the control unit 103 may perform an operation S21 of comparing a measured power value of the generator 112 with a target power value, and an operation S22 of determining whether or not the power is reduced according to the comparison result. This operation S22 is for the purpose of performing control of a power change corresponding to the power reduction when the power reduction of the generator 112 is identified (e.g., "Yes" at S22).

Next, the control unit 130 performs an operation S30 of generating power compensation request signals corresponding to the power reduction of the generator 112 when the power reduction of the generator 112 is identified. The power compensation request signals are control signals for increasing an amount of steam supplied to the high-pressure turbine 106. For example, when a branch steam control valve is provided on the branch pipe 103 as described above, the power compensation request signals may include signals for determining valve positions of the branch steam control valve.

Next, the control unit 130 performs an operation S41 of outputting the generated signals to regulate an amount of branch steam supplied through the branch pipe 103. In more detail, the control unit 130 may perform an operation of decreasing an amount of branch steam supplied to the second heater 110 and simultaneously or contemporaneously increasing an amount of steam supplied to the high-pressure turbine 106 by controlling the opening degree of the branch steam control valve.

In this case, the branch pipe control valve 104 may be controlled to be from a substantially fully open state to a partially closed state, from a partially closed state to a substantially fully closed state, or from a substantially fully open state to a substantially fully closed state.

In addition, the control unit 13 also performs an operation S42 of outputting the above-mentioned power compensation request signals to regulate an amount of condensate introduced into the condensate pump 116. In this case, the power compensation request signals may include signals for determining the valve positions of the condensate pipe control valve 115 provided on the condensate pipe 114. The control unit 130 may partially decrease or substantially fully block the amount of condensate introduced into the condensate pump 116 by controlling the opening degree of the condensate pipe control valve 115.

In addition, the control unit 130 may also perform an operation S43 of outputting the above-mentioned power compensation request signals to regulate an amount of high-pressure extraction steam supplied from the high-pressure turbine 106 to the high-pressure feed water heater 121 or an amount of low-pressure extraction steam supplied from the low-pressure turbine 111 to the low-pressure feed water heater 118.

In this case, the power compensation request signals may include signals for determining the valve positions of the extraction pipe control valve 123 provided on the first extraction pipe 122, or of the extraction pipe control valve 125 provided on the second extraction pipe 124. The control unit 130 may partially decrease or substantially fully block the amount of extraction steam supplied to the high-pressure feed water heater 121 or the low-pressure feed water heater 118 by controlling the opening degree of the extraction pipe control valve 123 or 125.

Meanwhile, any one of the above-mentioned operation S41 of regulating an amount of branch steam, operation S42 of regulating an amount of condensate, and operation S43 of regulating an amount of extraction steam, performed by the control unit 130, is performed according to the power compensation request signals output from the control unit 130. Regulating the amount of condensate is contemporaneously performed with regulating the amount of steam. Also, more steps from the above steps may also be simultaneously or contemporaneously performed or interlocked and performed at intervals of time. Two or more steps are simultaneously or contemporaneously performed in order to improve follow-up performance to the power change.

The method for reactor power control according to the example embodiment may further include an operation S50 of measuring power of the generator 112 after the operation S41 of regulating an amount of branch steam, operation S42 of regulating an amount of condensate, and operation S43 of regulating an amount of extraction steam.

In this case, the control unit 130 may perform an operation S62 of comparing a measured power value of the generator 112 with a target power value to determine whether or not power compensation is performed.

When it is identified that the power is still reduced, that is, the power compensation is requested, the operation S30 of generating power compensation request signals and the subsequent control steps may be performed again.

When it is identified that the power compensation is performed, the control unit 130 may perform an operation S70 of controlling the amount of branch steam, amount of condensate, and amount of extraction steam such that these amounts are returned to a state before the power compensation request signals are output. That is, the control unit 130 may output control signals such that the opening degrees of the branch pipe control valve 104, condensate pipe control valve 115, and extraction pipe control valves 123 and 125 are returned to a state before the power compensation request signals are output. Subsequently, the power information of the generator 112 may be continuously transmitted to the control unit 130. When the power of the generator 112 is reduced, the above-mentioned series of control steps may be performed again.

The above-mentioned apparatus for reactor power control of a steam turbine power generation system according to the example embodiment has been illustratively described to be applied to the nuclear power generation system 100. However, the follow-up control performed through the control of the opening degree of the above-mentioned condensate pipe control valve 115 or extraction pipe control valve 123 or 125 when the power of the generator is changed may also be applied to a thermal power generation system as well as to a nuclear power generation system such as, for example, the power generation system 100.

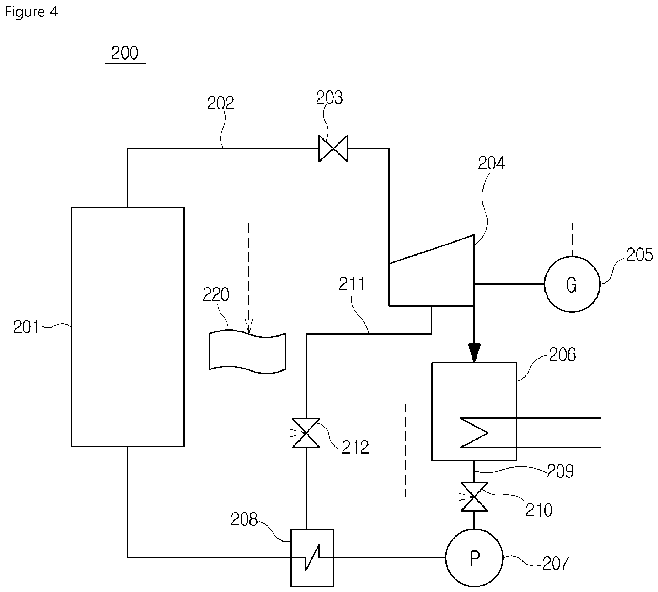

Hereinafter, an apparatus for reactor power control of a steam turbine power generation system capable of being applied to a thermal power generation system according to another example, which does however not form part of the invention, will be described in detail with reference to Fig. 4. However, the duplicated description of the same configurations will be simply described or omitted below. Fig. 4 is a diagram schematically illustrating a configuration of a steam turbine power generation system including an apparatus for reactor power control according to another example.

As shown in Fig. 4, a thermal power generation system 200 to which the apparatus for reactor power control according to the example embodiment is applicable may include a turbine 204 supplied with steam to rotate a generator 205, a condenser 206 for condensing the steam discharged from the turbine 204, a condensate pump 207 for feeding condensate condensed by the condenser 206, and a feed water heater 208 for heating the condensate.

According to at least one example not forming part of the invention, the turbine 204 may be supplied with the steam from a boiler 201 through a main steam pipe 202, and the main steam pipe 202 may be provided with a main steam pipe control valve 203 for regulating an amount of steam supplied to the turbine 204.

Heat energy of the steam supplied to the turbine 204 is converted into rotational energy to rotate the turbine 204, and the generator 205 connected to the turbine 204 is rotated by the rotational energy.

The steam discharged from the turbine 204 is condensed by the condenser 206, and the condensate is supplied to the feed water heater 208 by the condensate pump 207 through a condensate pipe 209. Extraction steam is supplied from the turbine 204 to the feed water heater 208 through an extraction pipe 211 connected between the feed water heater 208 and the turbine 204. The condensate supplied to the feed water heater 208 is heated by the extraction steam as a heat source.

Feed water heated by the feed water heater 208 may be supplied back to the boiler 201.

The shown thermal power generation system 200 may differ from a nuclear power generation system in that a moisture separator reheater and a branch pipe through which branch steam is supplied to the moisture separator reheater are not provided in the thermal power generation system 200.

Although the turbine 204 is configured as one turbine, as shown in the drawing, the example embodiments are not limited thereto. For example, the turbine may also include a high-pressure turbine and a low-pressure turbine, or a high-pressure turbine, an intermediate-pressure turbine, and a low-pressure turbine.

Similarly to the apparatus for reactor power control according to the previous example embodiment, the apparatus for reactor power control according to the example embodiment may include a condensate pipe control valve 210 provided on the condensate pipe 209, and an extraction pipe control valve 212 provided on the extraction pipe 211.

Opening degrees of the condensate pipe control valve 210 and the extraction pipe control valve 212 are controlled by a control unit 220 included in the example embodiment.

When it is identified that power of the generator is reduced through measured power information of the generator, the control unit 220 may generate power compensation request signals when power compensation is required. The signals may include signals for determining valve positions of the above-mentioned condensate pipe control valve 210 or the extraction pipe control valve 212.

The opening degrees of the condensate pipe control valve 210 and the extraction pipe control valve 212 may be controlled according to the power compensation request signals output from the control unit 220. By such control, it may be possible to increase an amount of steam used for actuation of the turbine 204, or to reduce power required in the condensate pump 207. Consequently, it may be possible to compensate for the power of the generator.

As is apparent from the above description, according to example embodiments, in order to compensate for power when a power reduction of a generator is identified, control for increasing an amount of steam introduced into a turbine, control for decreasing an amount of steam discharged from the turbine, or control for reducing power required in a condensate pump is performed, instead of control of an amount of steam in a reactor or a boiler having a large time constant. Such control may be realized by controlling a control valve for a short time. Accordingly, follow-up performance corresponding to a power change is significantly improved and thus efficiency of a power generation system may be significantly increased.

While the example embodiments have been described with respect to the specific embodiments, it will be apparent to those skilled in the art that various changes and modifications may be made without departing from the scope defined in the following claims.

## Claims

1. An apparatus for reaction vessel power control of a steam turbine power generation system including a reaction vessel (101), a high-pressure turbine (106) configured to receive supplied steam from the reaction vessel (101) through a main steam pipe (102), a low-pressure turbine (111) configured to receive discharged steam from the high-pressure turbine (106) via a moisture separator reheater (107), a branch pipe (103) branched from the main steam pipe (102) and connected to the moisture separator reheater (107), a generator (112) connected to the low-pressure turbine (111), a condenser (113) configured to condense the steam discharged from the low-pressure turbine (111), a condensate pump (116) configured to feed condensate condensed by the condenser (113), and feed water heaters (118, 121) configured to heat the condensate, the apparatus comprising:
a branch pipe control valve (104) on the branch pipe (103);
a control unit (130) configured to control an opening degree of the branch pipe control valve (104), wherein the control unit (130) is configured to control the opening degree of the branch pipe control valve (104) according to a power compensation request signal corresponding to a power reduction of the generator (112),
**characterized in that** the apparatus further includes a condensate pipe control valve (115) on a condensate pipe (114) connected between the condenser (113) and the condensate pump (116), an opening degree of the condensate pipe control valve (115) being controlled by the control unit (130) according to the power compensation request signal.

2. The apparatus according to claim 1, wherein the control unit (130) is configured to control the branch pipe control valve (104) to be in any one of a substantially fully open state, a partially closed state, and a substantially fully closed state.

3. The apparatus according to any one of the preceding claims, further comprising an extraction pipe control valve (123, 125) on one of a first extraction pipe (122) connected between a low-pressure feed water heater (118) of the feed water heaters and the low-pressure turbine (111), and on a second extraction pipe (124) connected between a high-pressure feed water heater (121) of the feed water heaters and the high-pressure turbine (106), the control unit (130) being configured to control an opening degree of the extraction pipe control valve (123, 125).

4. The apparatus according to any one of the preceding claims, wherein the moisture separator reheater (107) comprises a moisture separator (108) configured to separate moisture, and first and second heaters (109. 110) configured to heat steam from which the moisture is separated.

5. The apparatus according to claim 4, wherein the branch pipe (103) is connected to the second heater (110) such that branch steam is supplied to the second heater (110) through the branch pipe (103).

6. A method for reaction vessel power control of a steam turbine power generation system including a reaction vessel (101), a high-pressure turbine (106) to which steam is supplied from the reaction vessel (101) through a main steam pipe (102), a low-pressure turbine (111) to which the steam discharged from the high-pressure turbine (106) is supplied via a moisture separator reheater (107), a branch pipe (103) branched from the main steam pipe (102) to be connected to the moisture separator reheater (107), a generator (112) connected to the low-pressure turbine (111), a condenser (113) for condensing the steam discharged from the low-pressure turbine (111), a condensate pump (116) for feeding condensate condensed by the condenser (113), and feed water heaters (118, 121) for heating the condensate, the method comprising:
measuring (S10) power of the generator (112);
determining (S22) whether the measured power is reduced by comparing (S21) a measured power value of the generator (112) with a target power value;
generating (S30) a power compensation request signal corresponding to the power reduction of the generator (112);
regulating (S41) an amount of steam supplied through the branch pipe (103) according to the power compensation request signal,
**characterized by**:
regulating (S42) an amount of condensate introduced into the condensate pump (116) according to the power compensation request signal, wherein regulating (S42) the amount of condensate is contemporaneously performed with regulating (S41) the amount of steam.

7. The method according to claim 6, wherein regulating (S41) the amount of steam comprises controlling an opening degree of a branch pipe control valve (104) provided on the branch pipe (103).

8. The method according to claim 6 or 7, wherein the branch pipe control valve (104) is controlled (S41) to become any one of a substantially fully open state, a partially closed state, and a substantially fully closed state.

9. The method according to any one of the preceding claims 6-8, further comprising:
determining (S62) whether power compensation is performed by measuring (S50) the power of the generator (112); and
controlling (S70) the branch pipe control valve (104) such that the branch pipe control valve (104) is in a state before regulating the amount of steam according to the determination of the power compensation.

10. The method according to any one of the preceding claims 6-9, further comprising, after generating (S30) the power compensation request signal, regulating (S43) an amount of extraction steam supplied from the high-pressure turbine (106) or the low-pressure turbine (111) to the feed water heaters (118, 121) according to the power compensation request signal.

11. The method according to claim 10, wherein regulating the amount of extraction steam (S43) is contemporaneously performed with regulating the amount of steam (S41).

## Patentansprüche

1. Vorrichtung zur Reaktionsbehälterleistungssteuerung eines Dampfturbinenleistungserzeugungssystems, das einen Reaktionsbehälter (101), eine Hochdruckturbine (106), die konfiguriert ist, von dem Reaktionsbehälter (101) durch ein Hauptdampfrohr (102) zugeführten Dampf aufzunehmen, eine Niederdruckturbine (111), die konfiguriert ist, von der Hochdruckturbine (106) ausgestoßenen Dampf über einen Feuchtigkeitsabscheidernacherhitzer (107) aufzunehmen, ein Abzweigrohr (103), das von dem Hauptdampfrohr (102) abzweigt und mit dem Feuchtigkeitsabscheidernacherhitzer (107) verbunden ist, einen Generator (112), der mit der Niederdruckturbine (111) verbunden ist, einen Kondensator (113), der konfiguriert ist, den Dampf, der von der Niederdruckturbine (111) ausgestoßen wird, zu kondensieren, eine Kondensatpumpe (116), die konfiguriert ist, durch den Kondensator (113) kondensiertes Kondensat einzuspeisen und Speisewasserheizvorrichtungen (118, 121), die konfiguriert sind, das Kondensat zu erwärmen, enthält, wobei die Vorrichtung Folgendes umfasst:
ein Abzweigrohrsteuerventil (104) an dem Abzweigrohr (103);
eine Steuereinheit (130), die konfiguriert ist, einen Öffnungsgrad des Abzweigrohrsteuerventils (104) zu steuern, wobei die Steuereinheit (130) konfiguriert ist, den Öffnungsgrad des Abzweigrohrsteuerventils (104) gemäß einem Leistungskompensationsanfragesignal entsprechend einer Leistungsreduzierung des Generators (112) zu steuern,
**dadurch gekennzeichnet, dass** die Vorrichtung ferner ein Kondensatrohrsteuerventil (115) an einem Kondensatrohr (114), das zwischen dem Kondensator (113) und der Kondensatpumpe (116) verbunden ist, enthält, wobei ein Öffnungsgrad des Kondensatrohrsteuerventils (115) durch die Steuereinheit (130) gemäß dem Leistungskompensationsanfragesignal gesteuert wird.

2. Vorrichtung nach Anspruch 1, wobei die Steuereinheit (130) konfiguriert ist, das Abzweigrohrsteuerventil (104) derart zu steuern, dass es sich in einem im Wesentlichen vollständig geöffneten Zustand, einem teilweise geschlossenen Zustand oder einem im Wesentlichen vollständig geschlossenen Zustand befindet.

3. Vorrichtung nach einem der vorhergehenden Ansprüche, die ferner ein Extraktionsrohrsteuerventil (123, 125) an einem ersten Extraktionsrohr (122), das zwischen einer Niederdruckspeisewasserheizvorrichtung (118) der Speisewasserheizvorrichtungen und der Niederdruckturbine (111) verbunden ist, oder an einem zweiten Extraktionsrohr (124), das zwischen einer Hochdruckspeisewasserheizvorrichtung (121) der Speisewasserheizvorrichtungen und der Hochdruckturbine (106) umfasst, wobei die Steuereinheit (130) konfiguriert ist, einen Öffnungsgrad des Extraktionsrohrsteuerventils (123, 125) zu steuern.

4. Vorrichtung nach einem der vorhergehenden Ansprüche, wobei der Feuchtigkeitsabscheidernacherhitzer (107) einen Feuchtigkeitsabscheider (108), der konfiguriert ist, Feuchtigkeit abzuscheiden, und einen ersten und einen zweiten Erhitzer (109, 110), die konfiguriert sind, Dampf, von dem die Feuchtigkeit abgeschieden wurde, zu erhitzen, umfasst.

5. Vorrichtung nach Anspruch 4, wobei das Abzweigrohr (103) mit dem zweiten Erhitzer (110) derart verbunden ist, dass dem zweiten Erhitzer (110) durch das Abzweigrohr (103) Zweigdampf zugeführt wird.

6. Verfahren zur Reaktionsbehälterleistungssteuerung eines Dampfturbinenleistungserzeugungssystems, das einen Reaktionsbehälter (101), eine Hochdruckturbine (106), der von dem Reaktionsbehälter (101) durch ein Hauptdampfrohr (102) Dampf zugeführt wird, eine Niederdruckturbine (111), der der von der Hochdruckturbine (106) ausgestoßene Dampf über einen Feuchtigkeitsabscheidernacherhitzer (107) zugeführt wird, ein Abzweigrohr (103), das von dem Hauptdampfrohr (102) abzweigt, um mit dem Feuchtigkeitsabscheidernacherhitzer (107) verbunden zu sein, einen Generator (112), der mit der Niederdruckturbine (111) verbunden ist, einen Kondensator (113) zum Kondensieren des Dampfs, der von der Niederdruckturbine (111) ausgestoßen wird, eine Kondensatpumpe (116) zum Einspeisen von Kondensat, das durch den Kondensator (113) kondensiert worden ist, und Speisewasserheizvorrichtungen (118, 121) zum Erwärmen des Kondensats, enthält, wobei das Verfahren Folgendes umfasst:
Messen (S10) der Leistung des Generators (112);
Bestimmen (S22) durch Vergleichen (S21) eines gemessenen Leistungswerts des Generators (112) mit einem Zielleistungswert, ob die gemessene Leistung verringert ist;
Erzeugen (S30) eines Leistungskompensationsanfragesignals, das der Leistungsreduzierung des Generators (112) entspricht;
Regulieren (S41) einer Dampfmenge, die durch das Abzweigrohr (103) gemäß dem Leistungskompensationsanfragesignal zugeführt wird,
**gekennzeichnet durch**
Regulieren (S42) einer Kondensatmenge, die in die Kondensatpumpe (116) gemäß dem Leistungskompensationsanfragesignal eingeleitet wird, wobei das Regulieren (S42) der Kondensatmenge gleichzeitig mit dem Regulieren (S41) der Dampfmenge durchgeführt wird.

7. Verfahren nach Anspruch 6, wobei das Regulieren (S41) der Dampfmenge das Steuern eines Öffnungsgrades eines Abzweigrohrsteuerventils (104), das an dem Abzweigrohr (103) vorgesehen ist, umfasst.

8. Verfahren nach Anspruch 6 oder 7, wobei das Abzweigrohrsteuerventils (104) gesteuert (S41) wird, einen im Wesentlichen vollständig geöffneten Zustand, einen teilweise geschlossenen Zustand oder einen im Wesentlichen vollständig geschlossenen Zustand anzunehmen.

9. Verfahren nach einem der vorhergehenden Anspruch 6-8, das ferner Folgendes umfasst:
Bestimmen (S62), ob die Leistungskompensation durch Messen (S50) der Leistung des Generators (112) durchgeführt wird; und
Steuern (S70) des Abzweigrohrsteuerventils (104) derart, dass das Abzweigrohrsteuerventil (104) sich in einem Zustand vor dem Regulieren der Dampfmenge gemäß der Bestimmung der Leistungskompensation.

10. Verfahren nach einem der vorhergehenden Anspruch 6-9, das nach dem Erzeugen (S30) des Leistungskompensationsanfragesignals ferner das Regulieren (S43) einer Extraktionsdampfmenge, die von der Hochdruckturbine (106) oder der Niederdruckturbine (111) gemäß dem Leistungskompensationsanfragesignal den Speisewasserheizvorrichtungen (118, 121) zugeführt wird, umfasst.

11. Verfahren nach Anspruch 10, wobei das Regulieren der Extraktionsdampfmenge (S43) gleichzeitig mit dem Regulieren der Dampfmenge (S41) durchgeführt wird.

## Revendications

1. Appareil de commande de puissance de cuve de réaction d'un système de génération d'électricité de turbine à vapeur comprenant une cuve de réaction (101), une turbine à haute pression (106) configurée pour recevoir de la vapeur fournie depuis la cuve de réaction (101) par l'intermédiaire d'un tuyau de vapeur principal (102), une turbine à basse pression (111) configurée pour recevoir de la vapeur déchargée depuis la turbine à haute pression (106) par l'intermédiaire d'un réchauffeur séparateur d'humidité (107), un tuyau de dérivation (103) dérivé du tuyau de vapeur principal (102) et raccordé au réchauffeur séparateur d'humidité (107), un générateur (112) raccordé à la turbine à basse pression (111), un condensateur (113) configuré pour condenser la vapeur déchargée depuis la turbine à basse pression (111), une pompe de condensat (116) configurée pour alimenter le condensat condensé par le condensateur (113), et des chauffe-eau d'alimentation (118, 121) configurés pour chauffer le condensat, l'appareil comprenant :
une vanne de commande de tuyau de dérivation (104) sur le tuyau de dérivation (103) ;
une unité de commande (130) configurée pour commander un degré d'ouverture de la vanne de commande de tuyau de dérivation (104), dans lequel l'unité de commande (130) est configurée pour commander le degré d'ouverture de la vanne de commande de tuyau de dérivation (104) en fonction d'un signal de demande de compensation de puissance correspondant à une réduction de puissance du générateur (112),
**caractérisé en ce que** l'appareil comprend en outre une vanne de commande de tuyau de condensat (115) sur un tuyau de condensat (114) raccordé entre le condensateur (113) et la pompe de condensat (116), un degré d'ouverture de la vanne de commande de tuyau de condensat (115) étant commandé par l'unité de commande (130) en fonction du signal de demande de compensation de puissance.

2. Appareil selon la revendication 1, dans lequel l'unité de commande (130) est configurée pour commander à la vanne de commande de tuyau de dérivation (104) d'être dans l'un quelconque d'un état sensiblement complètement ouvert, d'un état partiellement fermé et d'un état sensiblement complètement fermé.

3. Appareil selon l'une quelconque des revendications précédentes, comprenant en outre une vanne de commande de tuyau d'extraction (123, 125) sur l'un d'un premier tuyau d'extraction (122) raccordé entre un chauffe-eau d'alimentation à basse pression (118) des chauffe-eau d'alimentation et la turbine à basse pression (111), et sur un deuxième tuyau d'extraction (124) raccordé entre un chauffe-eau d'alimentation à haute pression (121) des chauffe-eau d'alimentation et la turbine à haute pression (106), l'unité de commande (130) étant configurée pour commander un degré d'ouverture de la vanne de commande de tuyau d'extraction (123, 125).

4. Appareil selon l'une quelconque des revendications précédentes, dans lequel le réchauffeur séparateur d'humidité (107) comprend un séparateur d'humidité (108) configuré pour séparer l'humidité, et des première et deuxième chaudières (109, 110) configurées pour chauffer la vapeur de laquelle l'humidité est séparée.

5. Appareil selon la revendication 4, dans lequel le tuyau de dérivation (103) est raccordé à la deuxième chaudière (110) de sorte qu'une vapeur de dérivation soit fournie à la deuxième chaudière (110) par l'intermédiaire du tuyau de dérivation (103).

6. Procédé de commande de puissance de cuve de réaction d'un système de génération d'électricité de turbine à vapeur comprenant une cuve de réaction (101), une turbine à haute pression (106) à laquelle de la vapeur est fournie depuis la cuve de réaction (101) par l'intermédiaire d'un tuyau de vapeur principal (102), une turbine à basse pression (111) à laquelle de la vapeur déchargée depuis la turbine à haute pression (106) est fournie par l'intermédiaire d'un réchauffeur séparateur d'humidité (107), un tuyau de dérivation (103) dérivé du tuyau de vapeur principal (102) à raccorder au réchauffeur séparateur d'humidité (107), un générateur (112) raccordé à la turbine à basse pression (111), un condensateur (113) pour condenser la vapeur déchargée depuis la turbine à basse pression (111), une pompe de condensat (116) pour alimenter le condensat condensé par le condensateur (113), et des chauffe-eau d'alimentation (118, 121) pour chauffer le condensat, le procédé comprenant :
la mesure (S10) d'une puissance du générateur (112) ;
la détermination (S22) si la puissance mesurée est réduite par la comparaison (S21) d'une valeur de puissance mesurée du générateur (112) à une valeur de puissance cible ;
la génération (S30) d'un signal de demande de compensation de puissance correspondant à la réduction de puissance du générateur (112) ;
la régulation (S41) d'une quantité de vapeur fournie par l'intermédiaire du tuyau de dérivation (103) en fonction du signal de demande de compensation de puissance,
**caractérisé par** :
la régulation (S42) d'une quantité de condensat introduit dans la pompe de condensat (116) en fonction du signal de demande de compensation de puissance, dans lequel la régulation (S42) de la quantité de condensat est effectuée simultanément avec la régulation (S41) de la quantité de vapeur.

7. Procédé selon la revendication 6, dans lequel la régulation (S41) de la quantité de vapeur comprend la commande d'un degré d'ouverture d'une vanne de commande de tuyau de dérivation (104) prévue sur le tuyau de dérivation (103).

8. Procédé selon la revendication 6 ou 7, dans lequel il est commandé (S41) à la vanne de commande de tuyau de dérivation (104) d'être dans l'un quelconque d'un état sensiblement complètement ouvert, d'un état partiellement fermé et d'un état sensiblement complètement fermé.

9. Procédé selon l'une quelconque des revendications 6 à 8, comprenant en outre :
la détermination (S62) si une compensation de puissance est effectuée par la mesure (S50) de la puissance du générateur (112) ; et
la commande (S70) de la vanne de commande de tuyau de dérivation (104) de sorte que la vanne de commande de tuyau de dérivation (104) soit dans un état avant la régulation de la quantité de vapeur en fonction de la détermination de la compensation de puissance.

10. Procédé selon l'une quelconque des revendications 6 à 9, comprenant en outre, après la génération (S30) du signal de demande de compensation de puissance, la régulation (S43) d'une quantité de vapeur d'extraction fournie depuis la turbine à haute pression (106) ou la turbine à basse pression (111) aux chauffe-eau d'alimentation (118, 121) en fonction du signal de demande de compensation de puissance.

11. Procédé selon la revendication 10, dans lequel la régulation de la quantité de vapeur d'extraction (S43) est effectuée simultanément avec la régulation de la quantité de vapeur (S41).
